# FASCICULE DE BREVET EUROPEEN

(11) **EP 3 948 338 B1**
(45) Date de publication et mention de la délivrance du brevet: **13.12.2023**
(21) Numéro de dépôt: 20715400.6
(22) Date de dépôt: 06.04.2020
(51) Int. Cl.: G01S 13/20, G01S 7/02, G01S 7/03, H01Q 15/24, G01S 13/90, G01S 13/933, G01S 13/10, G01S 13/22

(54) **PROCÉDÉ ET DISPOSITIF D'ÉMISSION-RÉCEPTION RADAR PAR CHANGEMENT DYNAMIQUE DE POLARISATION NOTAMMENT POUR L'IMPLÉMENTATION DE MODES RADAR ENTRELACÉS**
VERFAHREN UND VORRICHTUNG ZUM SENDEN/EMPFANGEN VON RADAR DURCH DYNAMISCHE POLARISATIONSÄNDERUNG, INSBESONDERE ZUR IMPLEMENTIERUNG VON VERSCHACHTELTEN RADARBETRIEBSARTEN
METHOD AND DEVICE FOR TRANSMITTING/RECEIVING RADAR BY DYNAMIC CHANGING OF POLARISATION, IN PARTICULAR FOR IMPLEMENTING INTERLEAVED RADAR MODES

(30) Priorité: 04.04.2019 FR 1903614
(43) Date de publication de la demande: 09.02.2022
(73) Titulaire: THALES, 92190 Meudon (FR)
(72) Inventeur: POREZ, Nicolas, 33700 MERIGNAC (FR); CORNIC, Pascal, 29238 BREST (FR); GARREC, Patrick, 33700 MERIGNAC (FR)
(74) Mandataire: Atout PI Laplace
(86) Numéro de dépôt international: PCT/EP2020/059783
(87) Numéro de publication internationale: WO 2020/201579

(56) Documents cités:
- FR-A1- 3 039 726
- JP-A- H11 142 504
- JIAN WANG ET AL: "Analysis of concatenated waveforms and required STC", RADAR CONFERENCE, 2008. RADAR '08. IEEE, IEEE, PISCATAWAY, NJ, USA, 26 mai 2008 (2008-05-26), pages 1-6, XP031376080, ISBN: 978-1-4244-1538-0

## Description

L'invention se rapporte au domaine général des systèmes de détection et de localisation radioélectriques.

Elle se rapporte en particulier au domaine de l'exploitation d'équipements radars, notamment de radars à impulsions longues avec de la compression d'impulsion et à la mise en oeuvre, sur de tels radars, de modes de fonctionnement à émissions entrelacées temporellement.

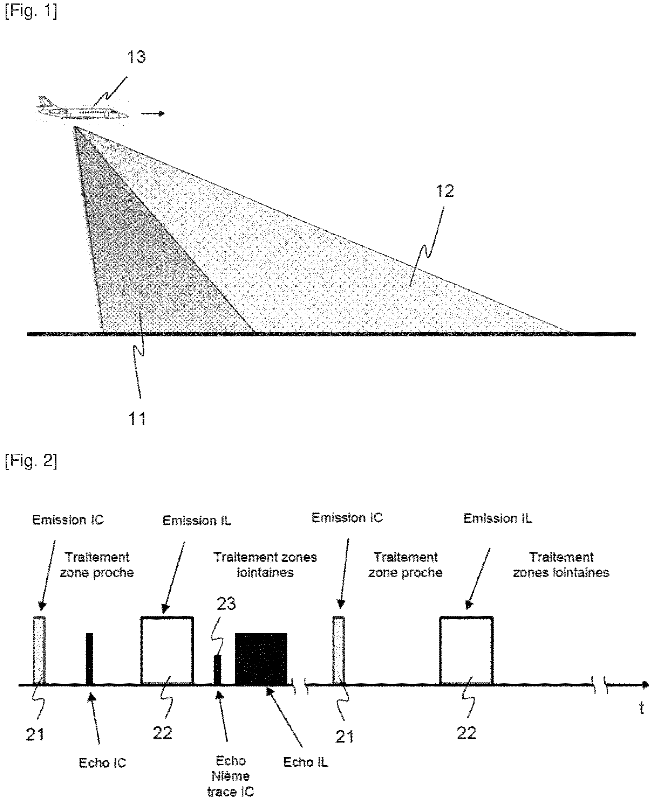

Classiquement les émissions des radars aéroportés de patrouille et de surveillance maritime sont en polarisation Horizontale (HH). Les radars de surveillance maritime ont notamment pour fonction d'explorer les zones de l'espace s'étendant sous le porteur sur une distance donnée, comme illustré par la figure 1.

Pour ce faire ils utilisent, de manière connue, des formes d'ondes de type bi-pulse, émises au moyen d'antennes actives à balayage électronique qui permettent d'effectuer des pointages dans deux directions différentes avec un temps de commutation quasi-instantané. Une telle configuration matérielle permet notamment de couvrir un domaine distance vaste en mettant à profit l'agilité en élévation de faisceau électronique.

-Dans le cadre de l'émission de formes d'ondes de type bi-pulse, illustré par la figure 2, un premier faisceau 11 dans lequel est émis une impulsion dite courte (IC), de longueur d'impulsion LI1, avec une période de récurrence TR1, éclaire une zone à distance proche, tandis qu'un second faisceau 12, dans lequel est émis une impulsion dite longue (IL), de longueur d'impulsion LI2, avec une période de récurrence TR2, éclaire une zone à distance plus lointaine, contigüe de la zone distance proche. L'ensemble des deux émissions 21 et 22, entrelacées temporellement permet de manière connue de couvrir un domaine distance continu dépourvu de zones aveugles.

Les termes d'impulsion longue et d'impulsion courte rendent compte des durées respectives des impulsions constituant chaque motif émis. Il faut notamment que la durée de la période de répétition (PRI) de l'impulsion courte soit plus grande que la durée de l'impulsion longue, pour pouvoir instrumenter la zone aveugle qui correspond au temps d'émission de l'impulsion longue.

Un tel mode de fonctionnement présente cependant, de manière connue également, l'inconvénient d'occasionner, durant la période d'écoute, de réception, qui suit l'émission d'une impulsion longue 22, l'apparition d'échos 23 consécutifs à la réflexion, par des objets situés en zone lointaine, de l'impulsion courte 21 ayant précédé l'impulsion considérée (échos IC de nièmes traces).

Ces échos, dits de "de nièmes traces" viennent se mêler aux échos issus de l'impulsion longue 22 et en altèrent l'exploitation en faisant apparaitre des signaux parasites dans la zone considérée. Ces parasites, inhérents au fonctionnement bi-pulse tel qu'il est conçu actuellement, doivent par la suite être détectés en vue d'être éliminés. Ce rôle est généralement dévolu, après réception, au moyens de traitement du signal qui mettent en oeuvre divers algorithmes connus qui tentent avec plus ou moins de succès de procéder à l'élimination des échos de nièmes traces. A cet effet, on emploi par exemple des procédés de vobulation.

Pour limiter les inconvénients apportés par la mise en oeuvre d'un mode de fonctionnement entrelacé, il est par ailleurs connu d'associer une couverture différente à chacune des phases de fonctionnement, phase de fonctionnement en zone proche utilisant les impulsions courtes (IC) ou de fonctionnement en zone lointaine utilisant les impulsions longues (IL).

Ainsi, pour l'émission d'une impulsion courte et la réception des échos correspondants (fonctionnement en zone proche), l'antenne du radar (du système de détection radioélectrique) considéré est généralement pointée selon un site déterminé, pour limiter la réception des échos de réverbération du sol qui présentent une forte amplitude en zone proche.

En revanche, pour l'émission d'une impulsion longue et la réception des échos correspondants (fonctionnement en zone lointaine), l'antenne du radar (du système de détection radioélectrique) considéré est généralement pointée selon un site faible, proche de l'horizontale, permettant à l'onde radioélectrique émise d'atteindre des zones plus éloignées.

Par suite, pour le mode de fonctionnement en zone lointaine, les échos de réverbération du sol peuvent être avantageusement ignorés car ils surviennent majoritairement lors de l'émission de l'impulsion longue elle-même, à un moment où le récepteur est inactif.

En revanche, du fait du passage à une couverture basse, les échos de réverbération de l'impulsion courte par le sol survenant pendant la mise en oeuvre du mode de fonctionnement en zone lointaine, sont également reçus par le récepteur.

Ces échos sont susceptibles de perturber, en particulier, le fonctionnement de la compression des impulsions longues à la réception, de sorte qu'une partie du gain de compression peut-être perdue.

Ainsi, en mettant en oeuvre les techniques connues, les systèmes actuels ne peuvent s'affranchir totalement des effets indésirables de l'utilisation d'un entrelacement temporel, tel que celui décrit précédemment, entrelacement nécessaire pour assurer une double couverture, en zone proche et en zone lointaine.

Un document JP H11 142504 A divulgue un dispositif radar d'émission et de réception à impulsions. Un document JIAN WANG et AI : « Analysis of concatened waveforms and required STC », RADAR CONFERENCE, 2008. RADAR'08. IEE, PISCATAWAY, NJ, USA, 26 mai 2008, pages 1-6, divulgue un système de formes d'ondes concaténées fournissant une couverture radar simultanée à courte et à grande distance.

Un but de l'invention est de proposer une solution permettant à un système de détection d'adopter un mode de fonctionnement dual lui permettant de couvrir les zones proches et lointaines de son environnement en émettant une forme d'onde comportant une impulsion courte suivie d'une impulsion longue, sans que ce mode de fonctionnement n'altère les performances de détection attendues pour la couverture des zones lointaines.
A cet effet, l'invention a pour objet un procédé d'émission-réception radar mettant en oeuvre un mode de fonctionnement courte portée avec émission d'une impulsion courte et un mode de fonctionnement longue portée avec émission d'une impulsion longue modulée, les impulsions courtes et longues émises étant temporellement entrelacées, ledit procédé étant caractérisé en ce que les impulsions courtes et les impulsions longues sont émises sous forme d'ondes présentant des polarisations distinctes, la polarisation de chaque onde émise est obtenue en émettant simultanément, par deux sources rayonnantes co-localisées, pour chaque impulsion, deux signaux présentant un déphasage θ dont la valeur varie selon la nature courte ou longue de l'impulsion considérée.
Selon divers mode de mise en oeuvre, le procédé selon l'invention peut présenter diverses caractéristiques, chacune pouvant être considérée seule ou en combinaison avec d'autre caractéristiques.
Selon une autre caractéristique, dans le cas d'une impulsion courte, les deux signaux émis présentent un déphasage θ dont la valeur induit une polarisation verticale de l'onde émise et en ce que, que pour l'impulsion longue, les deux signaux émis présentent un déphasage dont la valeur induit une polarisation horizontale de l'onde émise.
Selon une autre caractéristique, des signaux radioélectriques rétrodiffusés, consécutifs à l'émission d'une impulsion étant captés par chacune des sources rayonnantes, un déphasage θ' de valeur donnée est appliqué au signal radioélectrique reçu par cette même source.
Selon une autre caractéristique, le déphasage θ' est égal au déphasage θ.
L'invention a également pour objet un dispositif d'émission-réception radar apte à mettre en oeuvre un tel procédé, ledit dispositif étant configuré pour réaliser les opérations suivantes:
- produire deux signaux d'émission en radiofréquence (RF) synchrones lesdits signaux présentant entre eux un déphasage θ de valeur donnée commandable, lesdits signaux présentant les amplitudes sont également commandables;
- rayonner deux ondes radioélectriques, correspondant chacune à un des signaux RF d'émission produits, au moyen de, deux sources rayonnantes (deux éléments rayonnants), ces sources présentant chacune un axe de polarisation donné;
- réaliser la réception des signaux radioélectriques rétrodiffusés captés par chacune des sources rayonnantes et
- délivrer deux signaux de réception en radiofréquence (RF), chaque signal correspondant au signal radioélectrique rétrodiffusé capté par une des sources rayonnantes, auquel est appliqué un déphasage θ' donné.
Selon diverses dispositions, chacune pouvant être considérée seule ou en combinaison, le dispositif selon l'invention peut présenter différentes caractéristiques.
Ainsi, selon une première caractéristique, le dispositif comporte un élément rayonnant et un circuit électronique intégrant un premier module d'émission/réception, constitué d'une première voie d'émission et d'une première voie de réception et un second module d'émission/réception, constitué d'une seconde voie d'émission et d'une seconde voie de réception , les deux modules d'émission/réception présentent des structures identiques; chaque module d'émission/réception comportant un commutateur permettant de connecter alternativement la voie d'émission et la voie de réception du module considéré à l'élément rayonnant.
Selon une autre caractéristique, l'élément rayonnant est formé par une antenne patch, sensiblement plane, présentant une forme régulière, comportant quatre points de connexion disposés deux à deux symétriquement par rapport au centre du patch, selon deux axes perpendiculaires, deux points de connexions symétriques formant un port de connexion de l'antenne.
Selon une forme de réalisation, cet élément rayonnant est une antenne patch de forme carrée.
Selon une autre caractéristique, les premier et second modules d'émission/réception sont connectés chacun à l'élément rayonnant par une paire de lignes d'alimentation, les points de connexion disposés symétriquement sur le patch d'antenne sont reliés aux entrées/sorties d'un même module d'émission réception via un commutateur.
Selon une autre caractéristique, les entrées des première et seconde voies d'émission des deux modules d'émission/réception sont configurées pour être attaquées par un même signal RF délivré par un générateur de forme d'onde relié au circuit électronique par une entrée, la voie d'émission du second module d'émission/réception comportant en entrée un circuit déphaseur commandable, permettant d'introduire entre les deux voies d'émission un déphasage donné θ.
Selon une forme de réalisation le circuit électronique comporte un module de commande configuré pour générer de manière autonome les commandes des déphaseurs en charge du déphasage θ, ledit module comportant principalement une mémoire et un générateur d'adresses configuré pour réaliser un adressage circulaire des emplacements de la mémoire.
Selon une première forme de réalisation, les sorties des première et seconde voies de réception des modules d'émission/réception sont sommées au moyen d'un circuit additionneur puis reliées à un même récepteur par une sortie commune du circuit électronique, la voie de réception du second module d'émission/réception comportant à sa sortie un circuit déphaseur commandable permettant d'introduire, entre les deux voies de réception, un déphasage donné θ égal au déphasage introduit entre les deux voies d'émission.
Selon une caractéristique, le circuit électronique comporte des déphaseurs commandables configurés pour appliquer un même déphasage ϕ au signal RF délivrés par le générateur de forme d'onde et aux signaux délivrés par les deux voies de réception.
Selon une autre forme de réalisation, les sorties des première et seconde voies de réception des modules d'émission/réception sont reliées, par deux sorties du circuit électronique, à deux voies de réception distinctes d'un même récepteur numérique configuré pour appliquer entre les signaux issus des deux voies de réception un déphasage θ'.
Selon une caractéristique, chacune des voies de réception comporte un déphaseur commandable, chacun des déphaseurs étant configurés pour appliquer à la voie de réception correspondante un même déphasage ϕ égal au déphasage appliqué au signal RF délivrés par le générateur de forme d'onde.
L'invention a encore pour objet un système de surveillance radar comportant un générateur de forme d'onde, un réseau d'antennes patch et un récepteur, ledit système comportant un ensemble de dispositifs d'émission-réception selon l'invention, le générateur de forme d'onde et le récepteur étant reliés à chacune des antennes patch du réseau par l'intermédiaire d'un dispositif d'émission-réception.

Les caractéristiques et avantages de l'invention seront mieux appréciés grâce à la description qui suit, description qui s'appuie sur les figures annexées.

Les figures annexées illustrent l'invention :
[Fig.1] et [Fig.2], mentionnées dans le préambule de cette description, présentent des illustrations schématiques mettant en évidence le problème technique auquel l'invention apporte une solution.
[Fig.3] et [Fig.4] présentent des illustrations, sous forme de chronogrammes, du principe général de fonctionnement de l'invention.
[Fig.5] présente un schéma de principe, de la structure d'un dispositif d'émission/réception permettant la mise en oeuvre du procédé selon l'invention, dispositif divulgué dans la demande de brevet FR 15 01644, déposée antérieurement par la demanderesse.
[Fig.6] présente un synoptique de la structure du dispositif d'émission/réception selon l'invention.
[Fig.7] présente un synoptique partiel de la structure du dispositif d'émission/réception de la figure 6 détaillant la structure du module de commande de phase et son positionnement dans les voies émission et réception du dispositif.
[Fig.8] présente un synoptique partiel de la structure du dispositif d'émission/réception de la figure 6 illustrant une forme alternative de réalisation des voies de réception.
[Fig.9] présente une illustration sous forme de chronogrammes, d'un mode de mise en oeuvre du dispositif selon l'invention adapté à la détection de la présence de câbles électriques.

Il est à noter que, sur les figures annexées, un même élément fonctionnel ou structurel porte, de préférence, un même symbole repère.

Comme cela a été dit précédemment, un des objets de l'invention est de faire face, dans le cadre notamment de systèmes de détection radar fonctionnant en mode bi-pulse pour supprimer les zones aveugles, aux problèmes consécutifs à la présence d'échos de Nièmes traces provenant d'une impulsion courte reçus durant la phase de réception des échos provenant de l'impulsion longue qui suit ladite impulsion courte.

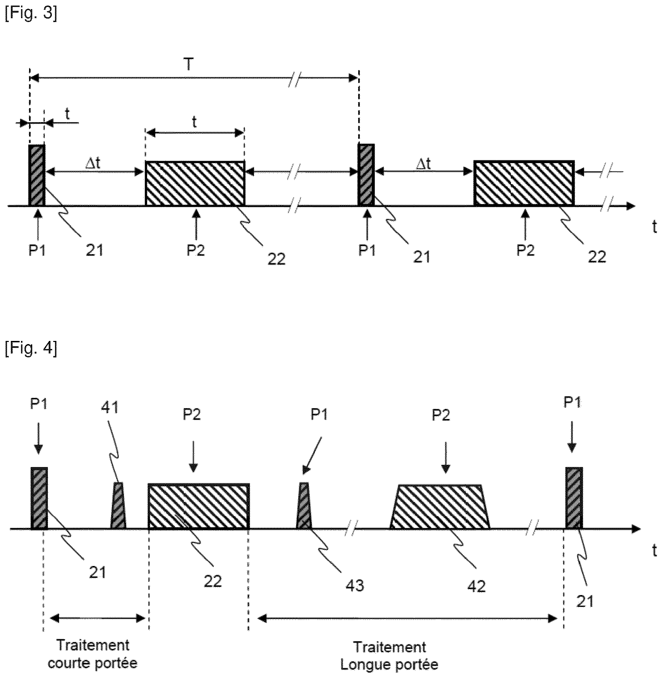

Pour ce faire le procédé selon l'invention consiste, comme l'illustre les figures 3 et 4, à différentier la polarisation de l'onde électromagnétique émise suivant que l'impulsion émise est une impulsion courte 21 ou une impulsion longue 22. Cette modification de la polarisation est réalisée en émettant simultanément pour chaque impulsion, par deux sources rayonnantes co-localisées, deux signaux présentant un déphasage dont la valeur varie selon que l'impulsion considérée est une impulsion courte ou longue. Par recombinaison dans l'air des ondes rayonnées correspondant aux deux signaux émis, le procédé selon l'invention permet de générer une onde résultante polarisée selon une polarisation donnée qui dépend de la phase relative des signaux rayonnés par les deux sources.

De manière préférentielle, en fonctionnement courte portée, on exploite une polarisation P1 verticale, de façon à minimiser l'effet des réflexions multiples, grâce à l'incidence de Brewster, et en fonctionnement longue portée, on exploite une polarisation P2 horizontale de façon à créer des franges d'interférence propres à augmenter avantageusement la portée radar.

La mise en oeuvre du procédé selon l'invention est réalisée en utilisant un dispositif configuré pour réaliser les opérations suivantes:
- produire deux signaux d'émission en radiofréquence (RF) synchrones, présentant entre eux un déphasage de valeur donnée, la valeur du déphasage étant commandable. Il est, de cette façon, possible de programmer un ensemble de polarisations avec un pas discrétisé dépendant de la commande numérique de déphasage, une discrétisation par pas de 3 degrés par exemple.
- produire deux signaux d'émission dont les amplitudes sont également commandables;
- rayonner deux ondes radioélectriques correspondant chacune à un des signaux RF d'émission, au moyen de deux sources rayonnantes (i. e. deux éléments rayonnants) présentant chacune un axe de polarisation donné;
- réaliser la réception des signaux radioélectriques rétrodiffusés captés par chacune des sources rayonnantes et délivrer deux signaux de réception en radiofréquence (RF) correspondants chacun à un signal radioélectrique; un déphasage relatif égal au déphasage introduit à l'émission étant appliqué aux signaux RF de réception.

Selon l'invention, ce dispositif est configuré pour recevoir un signal RF correspondant à la forme d'onde à émettre, ce signal étant par exemple synthétisé par le générateur de forme d'onde du radar, et pour délivrer, aux deux sources rayonnantes, deux signaux d'émission RF produits à partir du signal RF reçu, lesdits signaux d'émission RF étant déphasés l'un par rapport à l'autre d'un déphasage donné.

Ce dispositif est également configuré pour transmettre au récepteur du radar les signaux de réception RF correspondant aux signaux radioélectriques captés.

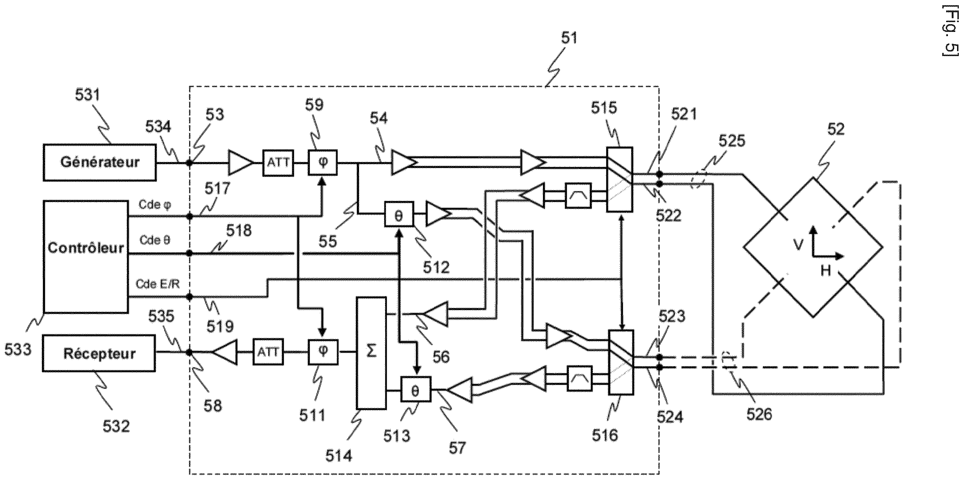

La figure 5 illustre la structure de principe d'une forme de réalisation d'un dispositif d'émission/réception apte à mettre en oeuvre le procédé selon l'invention. Cette structure de principe, décrite par ailleurs de manière détaillée dans la demande de brevet français FR 15 01644 déposée le 31/07/2015 par la demanderesse, est rappelée ici de façon à permettre la présentation claire des éléments spécifiques introduits dans cette structure dans le cadre de la présente invention.

Cette structure de principe, illustrée par la figure 5, comporte un élément rayonnant 52 et un circuit électronique 51, intégrant un premier module d'émission/réception, constitué d'une voie d'émission 54 et d'une voie de réception 56 et un second module d'émission/réception constitué d'une voie d'émission 55 et d'une voie de réception 57. Les deux modules d'émission/réception présentent des structures identiques.

Chaque module d'émission/réception comporte un commutateur 515 ou 516 respectivement, permettant de connecter alternativement la voie d'émission et la voie de réception du module considéré à l'élément rayonnant 52.

Par ailleurs les entrées des voies d'émission 54 et 55 des deux modules d'émission/réception sont configurées pour être attaquées par un même signal RF 534 délivré par le générateur de forme d'onde du radar 531 relié au circuit électronique 51 par une entrée 53. Cependant, la voie d'émission 55 du second module d'émission/réception comporte, en entrée, un circuit déphaseur commandable 512, permettant d'introduire entre les deux voies d'émission un déphasage donné θ.

De manière analogue, les deux voies de réception 56 et 57 sont sommées au moyen d'un circuit sommateur 514 pour former une voie de réception commune 58 reliée au récepteur radar 532 délivrant au récepteur radar 532, un signal de réception RF 535 correspondant à la somme des signaux radioélectriques délivrés par l'élément rayonnant 52. La voie de réception 57 du second module d'émission/réception comporte toutefois à sa sortie, avant sommation, un circuit déphaseur commandable 513 permettant d'introduire entre les deux voies de réception un déphasage donné θ égal au déphasage introduit entre les deux voies d'émission.

Les premier et second modules d'émission/réception ont principalement pour fonction de transformer le signal transmis par le générateur de formes d'ondes du radar, en signaux en radiofréquence, ou signaux d'émission RF, destinés à être transmis sous forme différentielle à l'élément rayonnant 52, respectivement via les entrées/sorties 521-522 du circuit électronique pour le premier module et les entrées/sorties 523-524 pour le second module.

L'élément rayonnant 52, représenté schématiquement sur la figure 5, consiste en une antenne «patch» sensiblement plane, présentant une forme régulière, une forme carrée par exemple et comportant quatre points de connexion (ports) disposés deux à deux symétriquement par rapport au centre du patch, selon deux axes perpendiculaires, chaque groupe de deux points de connexions symétriques formant un port de connexion de l'antenne. Comme le détaille la demande de brevet citée précédemment, une telle antenne permet de rayonner un signal RF d'excitation suivant deux axes de polarisation distincts perpendiculaires.

Comme l'illustre la figure 5, les premier et second modules d'émission/réception sont connectés chacun à l'élément rayonnant 52 par une paire de lignes d'alimentation, 525 et 526 respectivement. Les ports disposés symétriquement sont reliés aux entrées/sorties d'un même module d'émission réception via un commutateur 515 ou 516.

Le circuit électronique 51 comporte également des entrées de commande permettant à un module de contrôle 533, le calculateur chargé de la gestion de l'émission et de la réception au sein de l'équipement radar par exemple, de le piloter en appliquant sur ces entrées les commandes appropriées. Le circuit électronique 51 comporte ainsi:
- une entrée 517 dédiée à la commande d'un circuit déphaseur commandable 59, configuré pour appliquer un déphasage ϕ au signal délivré par le générateur de forme d'onde 531 avant son application aux voies d'émission 54 et 55 des deux modules d'émission/réception, et à la commande d'un circuit déphaseur commandable 511, configuré pour appliquer ce même déphasage ϕ aux signaux de réception RF issus des voies de réception 56 et 57 de ces mêmes modules;
- une entrée 518 dédiée à la commande d'un circuit déphaseur commandable 512, configuré pour appliquer au niveau de la voie d'émission 55 du second module d'émission/réception, un déphasage θ donné au signal délivré par le générateur de forme d'onde 531; et à la commande d'un circuit déphaseur commandable 513, configuré pour appliquer ce même déphasage θ aux signaux de réception RF issus de la voie de réception 57 de ce même module;
- une entrée 519 dédiée à la commande des circuits de commutation 515 et 516 qui permet de placer alternativement les entrées/sorties 521-524 des commutateurs 515 et 516 du circuit électronique 51 en entrée ou en sortie.

D'un point de vue fonctionnel, la mise en oeuvre des déphaseurs commandables 59 et 511 permet d'appliquer un même déphasage ϕ aux signaux délivrés à l'élément rayonnant 52 par les deux modules d'émission/réception ainsi qu'aux signaux de réception RF correspondant au signaux radioélectriques captés par l'élément rayonnant 52. Cette fonctionnalité permet avantageusement de réaliser une antenne multisources en associant en réseau les éléments rayonnants 52 d'une pluralité de dispositifs tels que celui représenté sur la figure 5, chaque dispositif étant affecté d'un déphasage ϕ fonction de la direction pointée par l'antenne.

Dans une telle structure, chaque dispositif reçoit le signal produit par un même générateur de signaux et applique audit signal un déphasage ϕ fonction de la position du dispositif dans le réseau avant de transmettre celui-ci, sous forme différentielle à l'élément rayonnant 52.

Inversement chaque dispositif reçoit les signaux délivrés sous forme différentielle par l'élément rayonnant 52 et le transforme en signal RF non différentiel et applique à ce dernier un déphasage ϕ fonction de la position du dispositif dans le réseau avant de transmettre celui-ci au récepteur.

Par ailleurs, la mise en oeuvre des déphaseurs commandables 512 et 513 permet avantageusement d'appliquer un déphasage complémentaire θ sur les voies d'émission 55 et de réception 56 du second module d'émission/réception, de sorte que les signaux délivrés par le circuit électronique 51 sur les lignes 525 et 526 d'alimentation de l'élément rayonnant 52, de même que les signaux de réception RF correspondant aux signaux radioélectriques délivrés par l'élément rayonnant 52, présentent entre eux un déphasage de valeur donnée θ.

Comme cela est détaillé dans la demande française mentionnée précédemment, la mise en oeuvre des déphaseurs commandables 512 et 513 permet ainsi avantageusement de rayonner deux signaux radioélectriques dont la recombinaison dans l'espace produit un signal présentant une polarisation dont la nature est fonction de la valeur du déphasage complémentaire θ appliqué au signal d'émission RF délivré par le second module d'émission réception.

Inversement cette mise en oeuvre permet, en réception, de ne prendre en compte que les signaux de réception RF correspondant aux signaux radioélectriques reçus présentant une polarité donnée déterminée par le déphasage θ.

Comme cela a été dit précédemment, les commandes de déphasage appliquées aux différents déphaseurs sont en principe délivrées au dispositif d'émission réception par un module de contrôle 533 intégré fonctionnellement sinon physiquement au système de gestion des émissions/réceptions de l'équipement radar auquel le dispositif est intégré. Ces commandes sont transmises aux déphaseurs par un bus de commande la valeur de la commande de déphasage étant maintenue constante entre deux changements de valeur.

Or, concernant notamment les déphaseurs 512 et 513 qui assurent le déphasage relatif θ entre les voies émission 54 et 55 et entre les voies réception 56 et 57, le lapse de temps entre deux changements de la valeur de chargement peut s'avérer court et la cadence de ces changements élevée, de sorte que le bus de commande qui véhicule ces valeurs peut présenter une activité électrique soutenue pendant les phases de réception des signaux radioélectriques rétrodiffusés par l'environnement, et provoquer l'apparition de signaux parasites sur les voie de réception. Ce peut être aussi le cas pour les déphaseurs 59 et 511.

Par suite la structure de principe présenté sur la figure 5, dans laquelle les commandes des déphaseurs, les déphaseurs 512 et 513 en particulier, sont délivrées directement par le module de contrôle 533, apparaît plus adaptée à des systèmes dans lesquels la cadence des changements de valeur des commandes de déphasage reste faible et/ou dans lesquels ces changements peuvent avoir lieu en dehors des phases de réception des échos rétrodiffusés.

Dans le contexte du procédé selon l'invention, la valeur du déphasage θ est amenée à varier, au minimum, au rythme de l'alternance des traitements courte et longue portée. Par suite, la valeur de la commande de déphasage θ appliquée aux déphaseurs 512 et 513 est susceptible d'évoluer fréquemment, cette variation provoquant des échanges de données fréquents sur le bus de commande par lequel le module de contrôle 533 vient commander chacun des déphaseurs 512 et 513.

C'est pourquoi dans le cadre de l'invention on envisage une adaptation fonctionnelle de la structure de principe du dispositif décrit dans la demande française cité précédemment et illustrée par la figure 5.

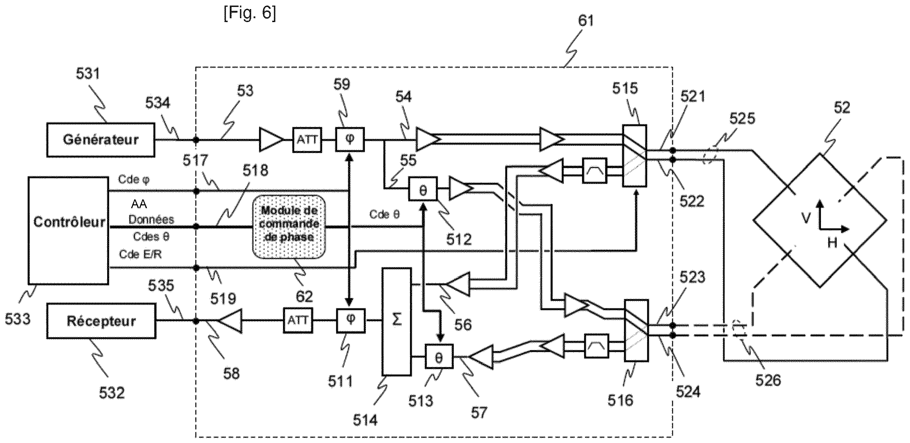

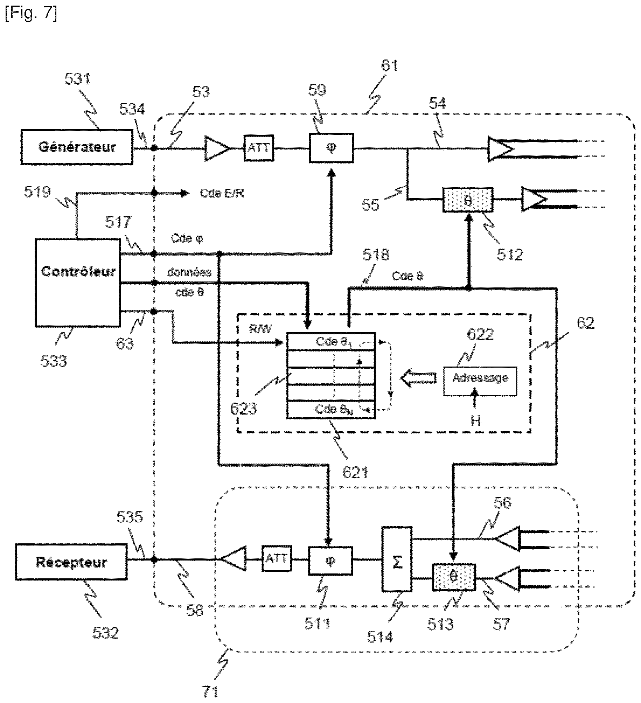

Cette adaptation fonctionnelle, illustrée par les figures 6 et 7, consiste à commander les déphaseurs 512 et 513 par l'intermédiaire d'un module de commande 62 comportant principalement une mémoire 621 et un générateur d'adresses 622. On obtient ainsi un dispositif d'émission-réception 61 capable de gérer de manière directe les séquences de changement de phase requis par le mode de fonctionnement souhaité (mode bi-pulse), sans transit de données numériques entre le module de contrôle 533 et le dispositif 61 durant les phases de fonctionnement en réception de ce dernier.

Selon l'invention le générateur d'adresses 622 est configuré de façon à effectuer, de manière périodique, un adressage circulaire de la mémoire 621, chaque emplacement mémoire 623 étant adressé successivement. Avantageusement, le générateur d'adresse 612 utilisé peut être programmé suivant le mode de fonctionnement considéré, pour effectuer une lecture cyclique des emplacements mémoire selon un ordre constant par ordre d'adresses croissant ou décroissant ou selon un ordre variable, alternativement par ordre d'adresses croissant puis décroissant.

D'un point de vue fonctionnel, la mémoire 621 peut être de différentes natures. Elle peut consister en une mémoire préprogrammée contenant différentes valeurs de commande déphasage destinées à être transmises en séquence aux déphaseurs 512 et 513.

Alternativement, elle peut consister en une mémoire reprogrammable dont le contenu est par exemple chargé par le contrôleur 533. La mémoire 621 est alors pourvue d'une entrée de commande R/W 63 permettant au contrôleur 533 d'y accéder en écriture.

L'agencement des données à l'intérieur de la mémoire 621 est par ailleurs réalisé de telle façon qu'il est possible, en réalisant un adressage circulaire, de reproduire une séquence donnée de valeurs de commandes de déphasage qui induit une variation périodique du déphasage θ appliqué aux voies d'émission 55 et de réception 57.

D'un point de vue fonctionnel également, la taille de la mémoire 621 est déterminée en fonction du nombre de valeurs distinctes que les commandes de déphasage peuvent prendre, ainsi que de la durée durant laquelle une commande donnée doit être maintenue.

Ainsi, si comme l'illustre la figure 7, le générateur d'adresse 622 est cadencé par une horloge constante H, une commande de phase donnée pourra être inscrite dans plusieurs emplacements mémoire successifs, le nombre d'emplacements étant fonction du rapport de la durée durant laquelle la commande doit être appliquée à la durée de la période H, la période de l'horloge H étant définie de manière appropriée.

La mise en place d'une mémoire 621 et d'un adressage en boucle (adressage circulaire), permet ainsi de réaliser des changements de la valeur de la commande de phase appliquée aux déphaseurs 512 et 513, selon un rythme à la fois variable et rapide, sans avoir, en cours de fonctionnement, à faire circuler des données numériques fluctuantes au voisinage des voies de réception 56 et 57 du dispositif. On évite ainsi avantageusement la génération de parasites de nature à altérer la réception des signaux.

Dans la configuration de fonctionnement illustrée par les chronogrammes des figures 3 et 4, la mémoire 621 pourra par exemple être programmée pour faire varier la commande de phase θ appliquée aux déphaseurs 512 et 513, au rythme de l'alternance des émissions successives des impulsions courtes 21 et des impulsions longues 22.

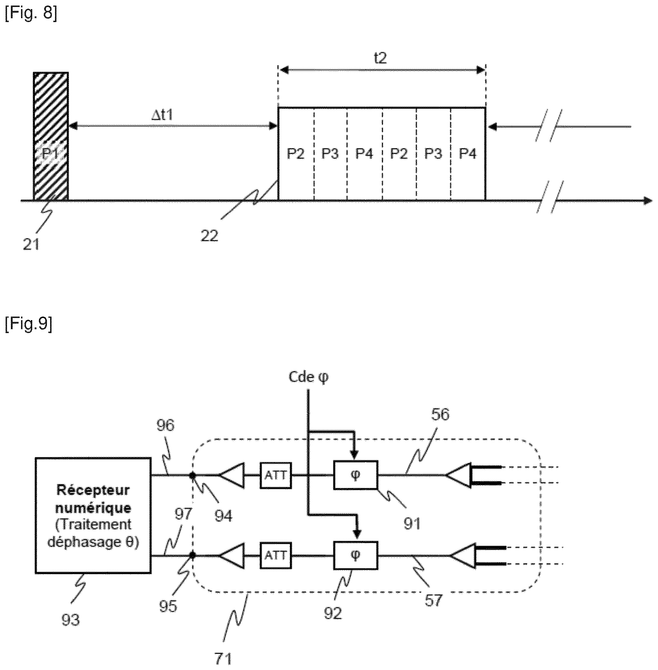

De même, dans la configuration de fonctionnement illustrée par le chronogramme de la figure 8, la mémoire 621 pourra par exemple être programmée pour faire varier la commande de phase θ appliquée aux déphaseurs 512 et 513, au rythme des émissions successives des impulsions courtes 21 et des impulsions longues 22 et, pour une impulsion longue 22, au rythme de la variation de phase appliqué au signaux d'émission RF constituant l'impulsion longue; les signaux d'émission RF constituant l'impulsion longue étant par exemple affectés d'un déphasage relatif θ prenant, par alternance, une valeur choisie dans un ensemble de valeurs, de façon à constituer un signal radioélectrique dont la polarisation varie pendant la durée d'émission de l'impulsion longue.

La figure 9 présente de manière schématique une forme alternative, une variante, de réalisation du dispositif d'émission-réception 61, illustré par les figures 6 et 7.

Selon cette variante, plus particulièrement adaptée à un dispositif d'émission-réception associé à un récepteur radar numérique 93, les deux voies de réception 56 et 57 du dispositif selon l'invention ne sont pas recombinées et les signaux de réception RF 96 et 97 issus des signaux radioélectriques captés par l'élément rayonnant 52 sont transmis par deux canaux distincts 94 et 95 au récepteur 93, ce dernier étant configuré pour réaliser un traitement séparé des deux voies.

Dans cette variante de mise en oeuvre, la commande de déphasage ϕ est appliquée sur les deux voies séparément au moyen de deux déphaseurs 91 et 92. L'application d'un déphasage entre les deux voies de réception est, dans ce cas, déportée au niveau du récepteur 93 et traité numériquement.

Cette variante de mise en oeuvre permet avantageusement d'appliquer numériquement entre les signaux correspondant à chacune des voies de réception 56 et 57 un déphasage θ' pouvant prendre différentes valeurs, fonctions de la direction de polarisation suivant laquelle on souhaite analyser les signaux reçus; θ' pouvant être identique à θ ou différent de ce dernier.

On peut ainsi, au niveau de chaque module d'émission-réception 61, analyser le signal rétrodiffusé capté par l'élément rayonnant 52 simultanément suivant différentes directions de polarisation, en jouant au niveau de la réception, sur la phase relative appliquée aux signaux reçus ainsi que sur l'amplitude relative de ces derniers.

Cette variante de mise en oeuvre permet également, de manière avantageuse, dans le cadre d'une antenne multisources constituée d'une pluralité de dispositifs d'émission-réception 61 formant un réseau de sources rayonnantes, d'analyser le signal reçu par l'antenne multisources globale simultanément suivant différentes directions de polarisation. Pour ce faire il suffit d'effectuer les sommations séparées de toutes les premières voies de réception des différents dispositifs d'une part et de toutes les secondes voies de réception des différents dispositifs d'autre part, et d'appliquer aux signaux résultants un traitement en phase identique à celui décrit précédemment.

Cette variante de mise en oeuvre permet encore avantageusement de faire varier la polarisation de l'impulsion par pas ou linéairement pour chercher la polarisation la plus favorable à la détection des câbles dans les systèmes aéroportés, notamment les hélicoptères; le balayage de toutes les polarisations permettant de trouver l'optimum de la polarisation pour le câble, étant entendu que toutes les polarisations sont numériquement calculées en réception. Ainsi, dans la mesure où la réflexion des signaux sur les câbles dépend de la géométrie des câbles (section et sens du toron), la possibilité de pouvoir utiliser l'ensemble des polarisations par balayage à l'émission va permettre de bénéficier d'une capacité de détection améliorée par rapport à celle offerte par les solutions connues envisageables en l'espèce, solutions qui ne permettent que des changements de polarisation par commutation, au mieux d'impulsion à impulsion.

Cette méthode permet en outre de bénéficier des deux polarisations simultanément, ce qui est particulièrement utile lorsque l'on cherche à effectuer un « Spot SAR » pour lequel il est nécessaire de disposer de toute la puissance du radar pour focaliser le signal, de sorte qu'il n'est pas possible de séparer l'antenne en deux, une partie pour la réception en H, une autre pour la réception en V. La méthode proposée permet d'avoir les deux polarisations simultanées en réception sans diminution de gain ni élargissement du faisceau de l'antenne.

La recherche par balayage des polarisations optimale pour une application donnée, autrement dit des polarisations permettant de bénéficier d'une capacité de détection améliorée par rapport à celle offerte par les solutions connues envisageables en l'espèce, peut notamment être effectuée en utilisant un processus de détermination de type heuristique.

Un tel processus consiste, dans un premier temps, à émettre des impulsions affectées de polarités déterminées de manière aléatoire puis, dans un second temps, à réaliser une évaluation de la qualité de la réception pour le choix de polarisations courant. Ce choix est évalué, en fonction de la distance et du type de cible, par mesure du taux de fausses alarmes et de la probabilité de détection. Si les critères retenus ne sont pas satisfaits de manière optimale il est procédé à un nouveau tirage donnant naissance à de nouvelles valeurs de polarisation. Les polarisations donnant les meilleurs résultats peuvent alors être, par ailleurs, mémorisées pour pouvoir être réutilisées en fonction du contexte considéré.

Ainsi un jeu de polarisations jugé optimal pour une distance, un type de cible et un type de clutter (i.e. de fouillis) donnés, pourra avantageusement être mémorisé dans une base de données. Un jeu de polarisations mémorisé pourra par la suite être appliqué tel quel dans des circonstances analogues ou être utilisée comme base de départ d'un processus d'affinage mettant en oeuvre des changements de polarisation parcellaires et aléatoires permettant d'optimiser en temps réel la qualité de réception obtenue, l'affinage des données mémorisées permettant d'enrichir et d'améliorer la base de données.

Le choix de polarisation ainsi effectué permet également d'améliorer le contraste entre les cibles et le clutter (i.e. le fouillis).

## Revendications

1. Procédé d'émission-réception radar mettant en oeuvre un mode de fonctionnement courte portée avec émission d'une impulsion courte et un mode de fonctionnement longue portée avec émission d'une impulsion longue modulée, les impulsions courtes et longues émises étant temporellement entrelacées, les impulsions courtes et les impulsions longues étant émises sous forme d'ondes présentant des polarisations distinctes, **caractérisé en ce que** la polarisation de chaque onde émise étant obtenue en émettant simultanément, par deux sources rayonnantes co-localisées, pour chaque impulsion, deux signaux présentant un déphasage θ dont la valeur varie selon la nature courte ou longue de l'impulsion considérée.

2. Procédé selon la revendication 1, **caractérisé en ce que**, pour l'impulsion courte, les deux signaux émis présentent un déphasage θ dont la valeur induit une polarisation verticale de l'onde émise et **en ce que**, que pour l'impulsion longue, les deux signaux émis présentent un déphasage dont la valeur induit une polarisation horizontale de l'onde émise.

3. Procédé selon l'une quelconque des revendications 1 ou 2, **caractérisé en ce que** des signaux radioélectriques rétrodiffusés consécutifs à l'émission d'une impulsion étant captés par chacune des sources rayonnantes, un déphasage θ' de valeur donnée est appliqué au signal radioélectrique reçu par cette même source.

4. Procédé selon la revendication 3, **caractérisé en ce que** le déphasage θ' est égal au déphasage θ.

5. Dispositif d'émission-réception radar, apte à mettre en oeuvre le procédé selon l'une quelconque des revendications 1 à 4, **caractérisé en ce qu'**il est configuré pour réaliser les opérations suivantes:
- produire deux signaux d'émission en radiofréquence (RF) synchrones lesdits signaux présentant entre eux un déphasage θ de valeur donnée commandable, lesdits signaux présentant les amplitudes sont également commandables;
- rayonner deux ondes radioélectriques, correspondant chacune à un des signaux RF d'émission produits, au moyen de deux sources rayonnantes présentant chacune un axe de polarisation donné;
- réaliser la réception des signaux radioélectriques rétrodiffusés captés par chacune des sources rayonnantes et
- délivrer deux signaux de réception en radiofréquence (RF) chaque signal correspondant au signal radioélectrique rétrodiffusé capté par une des sources rayonnantes, auquel est appliqué un déphasage θ' donné.

6. Dispositif selon la revendication 5, **caractérisé en ce qu'**il comporte un élément rayonnant (52) et un circuit électronique (51, 61) intégrant un premier module d'émission/réception, constitué d'une première voie d'émission (54) et d'une première voie de réception (56) et un second module d'émission/réception, constitué d'une seconde voie d'émission (55) et d'une seconde voie de réception (57), les deux modules d'émission/réception présentent une structure identique; chaque module d'émission/réception comportant un commutateur (515, 516), permettant de connecter alternativement la voie d'émission et la voie de réception du module considéré à l'élément rayonnant (52).

7. Dispositif selon l'une des revendications 5 ou 6, **caractérisé en ce que** l'élément rayonnant (52), est formé par une antenne patch, sensiblement plane, présentant une forme régulière, comportant quatre points de connexion disposés deux à deux symétriquement par rapport au centre du patch, selon deux axes perpendiculaires, deux points de connexions symétriques formant un port de connexion de l'antenne.

8. Dispositif selon la revendication 7, **caractérisé en ce que** l'élément rayonnant (52), est une antenne patch de forme carrée.

9. Dispositif selon l'une des revendications 7 ou 8, **caractérisé en ce que** les premier et second modules d'émission/réception sont connectés chacun à l'élément rayonnant (52) par une paire de lignes d'alimentation (525, 526), les points de connexion disposés symétriquement sur le patch d'antenne (52) sont reliés aux entrées/sorties d'un même module d'émission réception via un commutateur (515, 516).

10. Dispositif selon l'une quelconque des revendications 5 à 9, **caractérisé en ce que** les entrées des première et seconde voies d'émission (54, 55) des deux modules d'émission/réception sont configurées pour être attaquées par un même signal RF délivré par un générateur de forme d'onde (531) relié au circuit électronique (51) par une entrée (53), la voie d'émission (55) du second module d'émission/réception comportant en entrée un circuit déphaseur commandable (512), permettant d'introduire entre les deux voies d'émission un déphasage donné θ.

11. Dispositif selon l'une quelconque des revendications 5 à 10, **caractérisé en ce que** les sorties des première et seconde voies de réception (56, 57) des modules d'émission/réception sont sommées au moyen d'un circuit additionneur (514) puis reliées à un même récepteur (532) par une sortie commune (58) du circuit électronique (51), la voie de réception (57) du second module d'émission/réception comportant à sa sortie un circuit déphaseur commandable (513) permettant d'introduire, entre les deux voies de réception, un déphasage donné θ égal au déphasage introduit entre les deux voies d'émission (54, 55).

12. Dispositif selon l'une des revendications 5 à 11, **caractérisé en ce que** le circuit électronique (61) comporte un module de commande (62) configuré pour générer de manière autonome les commandes des déphaseurs (512, 513) en charge du déphasage θ, ledit module comportant principalement une mémoire (621) et un générateur d'adresses (622) configuré pour réaliser un adressage circulaire des emplacements (623) de la mémoire.

13. Dispositif selon l'une des revendications 11 ou 12, **caractérisé en ce que** le circuit électronique (51) comporte des déphaseurs commandables (59, 511) configurés pour appliquer un même déphasage ϕ au signal RF (534) délivrés par le générateur de forme d'onde (531) et aux signaux délivrés par les deux voies de réception (56, 57).

14. Dispositif selon l'une quelconque des revendications 5 à 10, **caractérisé en ce que** les sorties des première et seconde voies de réception (56, 57) des modules d'émission/réception sont reliées, par deux sorties (96, 97) du circuit électronique (51. 61), à deux voies de réception distinctes d'un même récepteur numérique (93) configuré pour appliquer entre les signaux issus des deux voies de réception un déphasage θ'.

15. Dispositif selon la revendication 14, **caractérisé en ce que** chacune des voies de réception (56, 57) comporte un déphaseur commandable (91, 92), chacun des déphaseurs étant configurés pour appliquer à la voie de réception correspondante un même déphasage ϕ égal au déphasage appliqué au signal RF (534) délivrés par le générateur de forme d'onde (531).

16. Système de surveillance radar comportant un générateur de forme d'onde (531), un réseau d'antennes patch (52) et un récepteur (532), **caractérisé en ce qu'**il comporte un ensemble de dispositifs d'émission-réception selon l'une quelconque des revendications 5 à 15 le générateur de forme d'onde (531) et le récepteur (532) étant reliés à chacune des antennes patch (52) du réseau par l'intermédiaire d'un dispositif d'émission-réception.

## Patentansprüche

1. Radarsende- und -empfangsverfahren, das eine Kurzstreckenbetriebsart mit Aussendung eines kurzen Impulses und eine Langstreckenbetriebsart mit Aussendung eines modulierten langen Impulses anwendet, wobei die ausgesendeten kurzen und langen Impulse zeitlich verschachtelt sind, wobei die kurzen Impulse und die langen Impulse in Form von Wellen mit unterschiedlichen Polarisationen ausgesendet werden, **dadurch gekennzeichnet, dass** die Polarisation jeder ausgesendeten Welle durch gleichzeitiges Aussenden, durch zwei kolokalisierte Strahlungsquellen, von zwei Signalen mit einer Phasenverschiebung θ für jeden Impuls erhalten wird, deren Wert je nach der kurzen oder langen Natur des betrachteten Impulses variiert.

2. Verfahren nach Anspruch 1, **dadurch gekennzeichnet, dass** für den kurzen Impuls die beiden ausgesendeten Signale eine Phasenverschiebung θ aufweisen, deren Wert eine vertikale Polarisation der ausgesendeten Welle induziert, und dadurch, dass für den langen Impuls die beiden ausgesendeten Signale eine Phasenverschiebung aufweisen, deren Wert eine horizontale Polarisation der ausgesendeten Welle induziert.

3. Verfahren nach Anspruch 1 oder 2, **dadurch gekennzeichnet, dass**, wenn auf die Aussendung eines Impulses folgende rückgestreute Funksignale von jeder der Strahlungsquellen erfasst werden, eine Phasenverschiebung θ' mit einem gegebenen Wert auf das von dieser selben Quelle empfangene Funksignal angewendet wird.

4. Verfahren nach Anspruch 3, **dadurch gekennzeichnet, dass** die Phasenverschiebung θ' gleich der Phasenverschiebung θ ist.

5. Radarsende- und -empfangsvorrichtung, ausgelegt zum Durchführen des Verfahrens nach einem der Ansprüche 1 bis 4, **dadurch gekennzeichnet, dass** sie zum Ausführen der folgenden Vorgänge konfiguriert ist:
- Erzeugen von zwei synchronen Hochfrequenz-(HF)-Sendesignalen, wobei die Signale untereinander eine Phasenverschiebung θ mit einem gegebenen steuerbaren Wert aufweisen, wobei die Signale mit den Amplituden ebenfalls steuerbar sind;
- Abstrahlen von zwei Funkwellen, die jeweils einem der erzeugten HF-Sendesignale entsprechen, unter Verwendung von zwei Strahlungsquellen, die jeweils eine gegebene Polarisationsachse aufweisen;
- Empfangen der von jeder der Strahlungsquellen erfassten rückgestreuten Funksignale; und
- Ausgeben von zwei Hochfrequenz-(HF)-Empfangssignalen, wobei jedes Signal dem von einer der Strahlungsquellen erfassten rückgestreuten Funksignal entspricht, auf das eine gegebene Phasenverschiebung θ' angewendet wird.

6. Vorrichtung nach Anspruch 5, **dadurch gekennzeichnet, dass** sie ein strahlendes Element (52) und eine elektronische Schaltung (51, 61) umfasst, die ein erstes Sende-/Empfangsmodul bestehend aus einem ersten Sendekanal (54) und einem ersten Empfangskanal (56) und ein zweites Sende-/Empfangsmodul bestehend aus einem zweiten Sendekanal (55) und einem zweiten Empfangskanal (57) integriert, wobei die beiden Sende-/Empfangsmodule eine identische Struktur aufweisen; jedes Sende-/Empfangsmodul einen Schalter (515, 516) aufweist, der es zulässt, abwechselnd den Sende- und den Empfangskanal des betrachteten Moduls mit dem strahlenden Element (52) zu verbinden.

7. Vorrichtung nach einem der Ansprüche 5 oder 6, **dadurch gekennzeichnet, dass** das strahlende Element (52) von einer im Wesentlichen ebenen Patch-Antenne gebildet wird, die eine regelmäßige Form aufweist und vier Verbindungspunkte umfasst, die paarweise symmetrisch in Bezug auf das Zentrum des Patches entlang zweier lotrechter Achsen angeordnet sind, wobei zwei symmetrische Verbindungspunkte einen Anschlussport der Antenne bilden.

8. Vorrichtung nach Anspruch 7, **dadurch gekennzeichnet, dass** das strahlende Element (52) eine quadratische Patch-Antenne ist.

9. Vorrichtung nach einem der Ansprüche 7 oder 8, **dadurch gekennzeichnet, dass** das erste und zweite Sende-/Empfangsmodul jeweils über ein Paar Versorgungsleitungen (525, 526) mit dem strahlenden Element (52) verbunden sind, wobei die symmetrisch auf dem Antennen-Patch (52) angeordneten Anschlusspunkte über einen Schalter (515, 516) mit den Ein-/Ausgängen eines selben Sende-/Empfangsmoduls verbunden sind.

10. Vorrichtung nach einem der Ansprüche 5 bis 9, **dadurch gekennzeichnet, dass** die Eingänge des ersten und zweiten Sendekanals (54, 55) der beiden Sende-/Empfangsmodule so konfiguriert sind, dass sie mit demselben HF-Signal angesteuert werden, das von einem Wellenformgenerator (531) geliefert wird, der über einen Eingang (53) mit der elektronischen Schaltung (51) verbunden ist, wobei der Sendekanal (55) des zweiten Sende-/Empfangsmoduls am Eingang eine steuerbare Phasenverschiebungsschaltung (512) umfasst, die es zulässt, eine gegebene Phasenverschiebung θ zwischen den beiden Sendekanälen einzuführen.

11. Vorrichtung nach einem der Ansprüche 5 bis 10, **dadurch gekennzeichnet, dass** die Ausgänge des ersten und zweiten Empfangskanals (56, 57) der Sende-/Empfangsmodule mittels einer Addierschaltung (514) summiert und dann über einen gemeinsamen Ausgang (58) der elektronischen Schaltung (51) mit einem selben Empfänger (532) verbunden werden, wobei der Empfangskanal (57) des zweiten Sende-/Empfangsmoduls an seinem Ausgang eine steuerbare Phasenverschiebungsschaltung (513) aufweist, die es zulässt, eine gegebene Phasenverschiebung θ gleich der zwischen den beiden Sendekanälen (54, 55) eingeführten Phasenverschiebung zwischen den beiden Empfangskanälen einzuführen.

12. Vorrichtung nach einem der Ansprüche 5 bis 11, **dadurch gekennzeichnet, dass** die elektronische Schaltung (61) ein Steuermodul (62) umfasst, das zum autonomen Erzeugen der Steuerungen der für die Phasenverschiebung θ zuständigen Phasenschieber (512, 513) konfiguriert ist, wobei das Modul hauptsächlich einen Speicher (621) und einen Adressgenerator (622) umfasst, der zum Durchführen einer zirkulären Adressierung der Speicherplätze (623) des Speichers konfiguriert ist.

13. Vorrichtung nach Anspruch 11 oder 12, **dadurch gekennzeichnet, dass** die elektronische Schaltung (51) steuerbare Phasenschieber (59, 511) umfasst, die zum Anwenden einer gleichen Phasenverschiebung ϕ auf das vom Wellenformgenerator (531) gelieferte HF-Signal (534) und auf die von den beiden Empfangskanälen (56, 57) gelieferten Signale konfiguriert sind.

14. Vorrichtung nach einem der Ansprüche 5 bis 10, **dadurch gekennzeichnet, dass** die Ausgänge des ersten und zweiten Empfangskanals (56, 57) der Sende-/Empfangsmodule über zwei Ausgänge (96, 97) der elektronischen Schaltung (51, 61) mit zwei unterschiedlichen Empfangskanälen eines selben digitalen Empfängers (93) verbunden sind, der zum Anwenden einer Phasenverschiebung θ' zwischen den aus den beiden Empfangskanälen stammenden Signalen konfiguriert ist.

15. Vorrichtung nach Anspruch 14, **dadurch gekennzeichnet, dass** jeder der Empfangskanäle (56, 57) einen steuerbaren Phasenschieber (91, 92) umfasst, wobei jeder der Phasenschieber zum Anwenden einer gleichen Phasenverschiebung ϕ gleich der auf das vom Wellenformgenerator (531) gelieferte HF-Signal (534) angewendeten Phasenverschiebung auf den entsprechenden Empfangskanal konfiguriert ist.

16. Radarüberwachungssystem mit einem Wellenformgenerator (531), einem Array von Patch-Antennen (52) und einem Empfänger (532), **dadurch gekennzeichnet, dass** es einen Satz von Sende-/Empfangsvorrichtungen nach einem der Ansprüche 5 bis 15 enthält, wobei der Wellenformgenerator (531) und der Empfänger (532) mit jeder der Patch-Antennen (52) des Arrays über eine Sende-/Empfangsvorrichtung verbunden sind.

## Claims

1. A radar emission-reception method implementing a short-range operating mode involving emitting a short pulse and a long-range operating mode involving emitting a long modulated pulse, with the emitted short and long pulses being temporally interleaved, the short pulses and the long pulses being emitted in the form of waves having distinct polarisations, **characterised in that** the polarisation of each emitted wave is acquired by two co-located radiating sources simultaneously emitting, for each pulse, two signals having a phase-shift θ, the value of which varies depending on the short or long nature of the considered pulse.

2. The method according to claim 1, **characterised in that**, for the short pulse, the two emitted signals have a phase-shift θ, the value of which induces a vertical polarisation of the emitted wave, and **in that**, for the long pulse, the two emitted signals have a phase-shift, the value of which induces a horizontal polarisation of the emitted wave.

3. The method according to any one of claims 1 or 2, **characterised in that**, with backscattered radiofrequency signals following the emission of a pulse being picked up by each of the radiating sources, a phase-shift θ' with a given value is applied to the radiofrequency signal received by this same source.

4. The method according to claim 3, **characterised in that** the phase-shift θ' is equal to the phase-shift θ.

5. A radar emission-reception device, capable of implementing the method according to one of claims 1 to 4, **characterised in that** it is configured to carry out the following operations:
- producing two synchronous radiofrequency (RF) emission signals, said signals having between them a phase-shift θ with a controllable given value, with said signals having the amplitudes also being controllable;
- radiating two radiofrequency waves, each corresponding to one of the produced emission RF signals, by means of two radiating sources each having a given polarisation axis;
- receiving backscattered radiofrequency signals picked up by each of the radiating sources; and
- delivering two radiofrequency (RF) reception signals, with each signal corresponding to the backscattered radiofrequency signal picked up by one of the radiating sources, to which a given phase-shift θ' is applied.

6. The device according to claim 5, **characterised in that** it comprises a radiating element (52) and an electronic circuit (51, 61) incorporating a first emission-reception module, formed by a first emission channel (54) and a first reception channel (56) and a second emission-reception module, formed by a second emission channel (55) and a second reception channel (57), with the two emission-reception modules having an identical structure, each emission-reception module having a switch (515, 516) allowing the emission channel and the reception channel of the considered module to be alternately connected to the radiating element (52).

7. The device according to one of claims 5 or 6, **characterised in that** the radiating element (52) is formed by a substantially flat patch antenna having a regular shape, comprising four connection points symmetrically disposed pairwise relative to the centre of the patch, on two perpendicular axes, with two symmetrical connection points forming a connection port of the antenna.

8. The device according to claim 7, **characterised in that** the radiating element (52) is a square patch antenna.

9. The device according to one of claims 7 or 8, **characterised in that** the first and second emission-reception modules are each connected to the radiating element (52) by a pair of power supply lines (525, 526), the connection points symmetrically disposed on the antenna patch (52) are linked to the inputs/outputs of the same emission-reception module via a switch (515, 516).

10. The device according to any one of claims 5 to 9, **characterised in that** the inputs of the first and second emission channels (54, 55) of the two emission-reception modules are configured to be attacked by the same RF signal delivered by a wave form generator (531) linked to the electronic circuit (51) by an input (53), with the emission channel (55) of the second emission-reception module comprising a controllable phase-shifter circuit (512) at the input allowing a given phase-shift θ to be introduced between the two emission channels.

11. The device according to any one of claims 5 to 10, **characterised in that** the outputs of the first and second reception channels (56, 57) of the emission-reception modules are summed by means of an adder circuit (514), then linked to the same receiver (532) by a common output (58) of the electronic circuit (51), the reception channel (57) of the second emission-reception module having a controllable phase-shifter circuit (513) at its output allowing a given phase-shift θ to be introduced between the two reception channels that is equal to the phase-shift introduced between the two emission channels (54, 55).

12. The device according to any of claims 5 to 11, **characterised in that** the electronic circuit (61) comprises a control module (62) configured to independently generate the commands for the phase-shifters (512, 513) responsible for the phase-shift θ, with said module mainly comprising a memory (621) and an address generator (622) configured to carry out circular addressing of the locations (623) of the memory.

13. The device according to any of claims 11 or 12, **characterised in that** the electronic circuit (51) comprises controllable phase-shifters (59, 511) configured to apply the same phase-shift ϕ to the RF signal (534) delivered by the wave form generator (531) and to the signals delivered by the two reception channels (56, 57).

14. The device according to any one of claims 5 to 10, **characterised in that** the outputs of the first and second reception channels (56, 57) of the emission-reception modules are linked, by two outputs (96, 97) of the electronic circuit (51, 61), to two distinct reception channels of the same digital receiver (93) configured to apply a phase-shift θ' between the signals originating from the two reception channels.

15. The device according to claim 14, **characterised in that** each of the reception channels (56, 57) comprises a controllable phase-shifter (91, 92), with each of the phase-shifters being configured to apply the same phase-shift ϕ to the corresponding reception channel that is equal to the phase-shift applied to the RF signal (534) delivered by the wave form generator (531).

16. A radar surveillance system having a wave form generator (531), an array of patch antennas (52) and a receiver (532), **characterised in that** it comprises a set of emission-reception devices according to any one of claims 5 to 15, with the wave form generator (531) and the receiver (532) being linked to each of the patch antennas (52) of the array by means of an emission-reception device.
